Europäisches Patentamt

European Patent Office

Office européen des brevets

(19)

(11) Publication number:

**0 290 615**

**A1**

(12)

# EUROPEAN PATENT APPLICATION

published in accordance with Art. 158(3) EPC

(21) Application number: **87907136.3**

(22) Date of filing: **29.10.87**

Data of the international application taken as a basis:

(86) International application number:
**PCT/JP87/00834**

(87) International publication number:
**WO88/03072 (05.05.88 88/10)**

(51) Int. Cl.³: **B 23 Q 3/157**

(30) Priority: **30.10.86 JP 259556/86**

(43) Date of publication of application:
**17.11.88 Bulletin 88/46**

(84) Designated Contracting States:
**CH DE FR GB IT LI**

(71) Applicant: **FANUC LTD**
**3580, Shibokusa Aza-Komanba Oshino-mura**
**Minamitsuru-gun Yamanashi 401-05(JP)**

(72) Inventor: **ARAKI, Hiroshi**
**Izumi Hights 503 3-10, Tamadaira 3-chome**
**Hino-shi Tokyo 191(JP)**

(72) Inventor: **ISHII, Hisao**
**403, 4-4, Nishiki-machi 1-chome Tachikawa-shi**
**Tokyo 190(JP)**

(72) Inventor: **AKIYAMA, Yoshihisa**
**Funuc-Utsugi-Ryou 386-1, Ishikawa-machi**
**Hachioji-shi Tokyo 192(JP)**

(72) Inventor: **NAGATOMI, Takashi Mezon-do-Noa**
**Motoyokoyama-522**
**9-10, Motoyokoyama-machi 2-chome**
**Hachioji-shi Tokyo 192(JP)**

(74) Representative: **Jackson, Peter Arthur et al,**
**GILL JENNINGS & EVERY 53-64 Chancery Lane**
**London WC2A 1HN(GB)**

(54) **TOOL ENCHANGER FOR MACHINE TOOL.**

(57) An armless tool exchanger for a machine tool, and more particularly a tool exchanger adapted to index magazine (9) in accordance with the rotation of a main shaft (5) and carry out the exchanging of a tool (8) between the main shaft (5) and a tool grip (10) supported on the magazine (9). This tool exchanger is provided with a first cam means (11) for maintaining constant the relative positions of a main shaft head (4) and a tool grip (10), a second cam means (12) for moving the toolgrip (10), and a third cam means (13) for moving a tool attaching and detaching means (6), while the tool grip (10) is moved to actuate the tool attaching and detaching means (6) in response to the vertical movement of a Z-slider (3), which is moved along a column (1), so as to retain the tool grip (10) out of a processing zone during a processing operation.

EP 0 290 615 A1

./...

Fig. 4

SPECIFICATION

TITLE OF THE INVENTION

TOOL EXCHANGER FOR MACHINE TOOL

TECHNICAL FIELD OF THE INVENTION

This invention relates to an improvement applicable to a tool exchanger for a machine tool. More specifically, this invention relates to an improvement applicable to a tool exchanger or a tool replacement system for a machine tool, for the purpose to prohibit any mutual disturbance from occurring between a work to be machined and any tool which is mounted on a magazine of the machine tool in the neighborhood of the tool presently employed or between a work to be machined and any part of the machine tool, thereby an operator of the machine tool is given a wide space for operation of the machine tool.

BACKGROUND OF THE INVENTION

Presently available are a variety of tool exchangers or tool replacement systems each of which has a magazine on which a plurality of tools are mounted to be selectively employed.

The inventors of this invention were successful in development of such a tool exchanger or a tool replacement system for a machine tool as was mentioned above, and filed an application for patent (PCT/JP82/00367). Figs. 1 and 2 show one embodiment of the above mentioned tool exchanger or tool replacement system for a machine tool, illustrated respectively in one position in which a tool 8 is coupled with a main spindle 5 and is disconnected from a magazine 9 and each piece of the bevel gears 20 and 21 is uncoupled from each other to allow machining and in the other position in which the tool 8 is not coupled with the main spindle 5 but is mounted on the magazine 9 and each piece of the bevel gears 20 and 21 are coupled to each other to allow the tool 8 to be exchanged to or replaced by another.

Referring to the drawings, this tool exchanger or tool replacement system developed by the inventors of this invention and which is available in the prior art, is provided a piece of bevel gear 20 supported by the lower end of a main spindle 5 rotatably supported by a spindle head 4, a magazine 9 movable along the spindle head 4 in the vertical direction and which holds a plurality of tools 8, and the other piece of bevel gear 21 supported by the magazine 9 and which is to couple with the aforementioned piece of bevel gear 20 at the upper end position of the stroke of the spindle head 4.

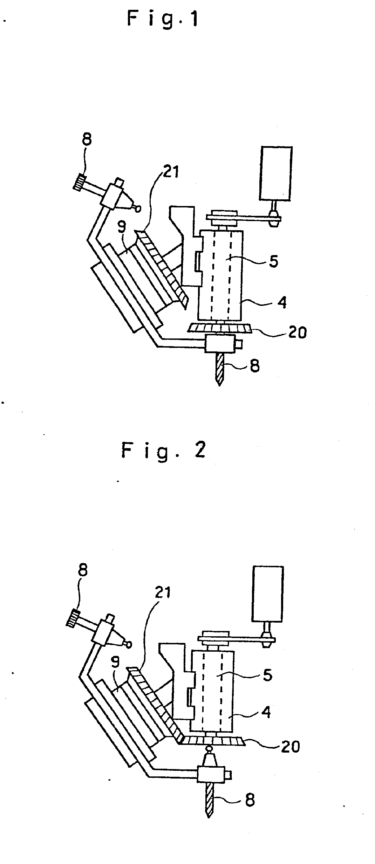

After a machining finishes at the position illustrated in Fig. 1, the tool 8 employed for the finished machining is replaced by another tool 8, by unclamp from the main spindle 5 by a tool attachment/detachment means (not shown) such as a drawbar etc. and by lifting the spindle head 4 which rotatably houses the main spindle 5 to the position illustrated in Fig. 2, remaining the magazine 9 at the position illustrated in Fig. 1. This upward move of the spindle head 4 causes the used tool 8 which was already unclamped from the main spindle 5 during the aforementioned step, to be drawn out of the main spindle 5. The upward move of the spindle head 4, incidentally, causes the bevel gears 20 and 21 to be mutually coupled. Then, the main spindle 5 is rotated to rotate the bevel gears 20 and 21 which rotate the magazine 9, until another tool 8 which will be employed for the next machining, meets the main spindle 5 during this rotation step, and the tool 8 which was employed in the last machining moves to another position at which it does not meet the main spindle 5. Thereafter, the spindle head 4 is lowered along the magazine 9, until the aforementioned bevel gears 20 and 21 are uncoupled and the newly selected tool 8 is clamped with the main spindle 5 by employing the tool attachment/detachment means (not shown) such as a drawbar etc. to return to the machining position illustrated in Fig. 1.

At the machining position illustrated in Fig. 1, one of the tool holders of the magazine 9 stays close to the lower end of the main spindle 5. Since the tool holders of the magazine 9 is not connected with the main spindle 5 but it surrounds the main spindle 5, however, the rotation of the main spindle 5 causes the tool 8 alone to rotate, readily allowing an operator of the machine tool to conduct various operation around the location close to the work (not shown) to be machined and the lower end of the main spindle 5. The tools 8 mounted on the tool holders (not shown) located adjacent to the tool holder facing the main spindle 5, however, causes some disturbance to the operator.

The aforementioned tool exchanger or tool replacement system needs no drive which is employable exclusively for exchanging tools or replacing a tool, because a drive for driving a main spindle is employable also for rotating the magazine for indexing a tool. As a result, the structure thereof is simple. Therefore, the tool exchanger or tool replacement system is convenient particularly from the practical viewpoints.

The aforementioned tool exchanger or tool replacement system which is illustrated in Figs. 1 and 2, allows one of the tool holders of the magazine to remain surrounding the lower end of the main spindle, resultantly disturbing the operator in his work in the neighborhood of the machining area. Further, some of the tool holders of the magazine located adjacent to the above mentioned one also disturbs the operator in his work in the neighborhood of the machining area.

OBJECT AND DISCLOSURE OF THE INVENTION

The object of this invention is to remove the aforementioned drawbacks and to provide a tool exchanger or tool replacement system for a machine tool having an advantage that a large space is available for an operator thereof to conduct his work in the machining area, in addition to an advantage that a rotation of a main spindle is uti-

lized for replacement of a tool with another or for exchange of tools and another advantage that drive which is employed exclusively for replacement of a tool with another or for exchange of tools, is unnecessary.

To achieve the aforementioned object, a tool exchanger or tool replacement system for a machine tool in accordance with this invention is provided :

(a) a Z-slider (3) slidable along a column (1),

(b) a spindle head (4) supported by the Z-slider (3) and rotatably housing a main spindle (5) and a tool attachment/detachment means (6) therein, and

(c) a magazine supporter (7) movable in the vertical direction along the column (1), and

(d) a magazine (9) which is rotatably supported by the magazine supporter (7) and which is provided a plurality of tool grips (10) each of which grips or ungrips a tool (8) during a period in which the tool (8) is replaced and each of which maintains a tool (8) during the period excluding the aforementioned period (a tool replacement period), is additionally provided :

(a) a first cam mechanism (11) provided a first cam (111) supported by the spindle head (4) and a first lever (112) rotatably supported by the column (1), for realizing a function wherein the first cam mechanism (11) operates in response to the vertical move of the Z-slider (3) and the spindle head (4), but the relative position of an assembly consisting of the magazine supporter (7), the magazine (9)

6

and the plurality of the tool grips (10) is kept unchanged with respect to the spindle head (4), during the period in which the arbitrarily selected one of the tool grips (10) and/or the tool attachment/detachment means (6) operate/operates,

(b) a second cam mechanism (12) provided a second cam (121) supported by the column (1) and a link mechanism (122) which link mechanism (122) is supported by the magazine supporter (7), is rotatable with respect to the magazine (9) and is movable forward and backward along the shaft thereof, for realizing a function wherein the arbitrarily selected one of the tool grips (10) is operated in response to the vertical move of the Z-slider (3) and the spindle head (4), and

(c) a third cam mechanism (13) provided a third cam (131) supported by the column (1) and a third lever (132) rotatably supported by the Z-slider (3), for operating the column attachment/detachment means (6).

The advantage of the tool exchanger or tool replacement system for a machine tool in accordance with this invention is that the three independent functions including (i) the shuttling of an arbitrarily selected tool grip (10) between the tool exchange or replacement position and the machining position, (ii) the gripping and ungripping operation of an arbitrarily selected one of the tool grips (10), and (iii) the attaching and detaching operation of the tool attachment/detachment means (6), are sequentially realized by employing the aforementioned cam mechanism assembly consisting of .the three cam mechanisms including the first cam mechanism (11) provided a first cam (111) supported by the spindle head (4) and a first lever (112) rotatably supported by the column (1), for realizing a function wherein the first cam mechanism (11) operates in response to the vertical move of the Z-slider (3) and the spindle head (4), but the relative position of the assembly consisting of the magazine supporter (7), the magazine (9) and the plurality of tool grips (10) is kept unchanged with respect to the spindle head (4), during the period in which the arbitrarily selected one of the tool grips (10) and/or the tool attachment/detachment means (6) operate/operates, the second cam mechanism (12) provided a second cam (121) supported by the column (1) and a link mechanism (122) which link mechanism (122) is supported by the magazine supporter (7), rotatable with respect to the magazine (9) and movable forward and backward along the shaft thereof, for realizing a function wherein the arbitrarily selected one of the tool grips (10) is operated in response to the vertical move of the Z-slider (3) and the spindle head (4), and the third cam mechanism (13) provided a third cam (131) supported by the column (1) and a third lever (132) rotatably supported by the Z-slider (3), for operating the column attachment/detachment means (6), which cam mechanism assembly is the subject matter essential for the tool exchanger or tool replacement system for a machine tool in accordance with this invention.

BRIEF DESCRIPTION OF THE DRAWINGS

A more detailed description will be presented below for an embodiment of the tool exchanger or tool replacement system for a machine tool in accordance with this invention, referring to the drawings tabulated below :

Fig. 1 is a schematic drawing of a tool exchanger or tool replacement system for a machine tool available in the prior art in the machining position (wherein a tool is clamped with a main spindle and unclamped from a magazine),

Fig. 2 is a schematic drawing of a tool exchanger or tool replacement system for a machine tool available in the prior art in the tool exchange or replacement position (wherein a tool is not clamped with a main spindle but is supported by a magazine),

Fig. 3 is a schematic drawing of a tool exchanger or tool replacement system for a machine tool in accordance with an embodiment of this invention in the machining position (wherein a machining has just finished),

Fig. 4 is a schematic drawing of a tool exchanger or tool replacement system for a machine tool in accordance with the embodiment of this invention in the middle position (wherein the relative position of one of the tool grips (10) and a tool (8) is slightly before arriving at the tool exchange or replacement position and wherein the vertical level of the tool grips (10) is identical to that of the arbour of the tool (8),

Fig. 5 is a schematic drawing of a tool exchanger or tool replacement system for a machine tool in accordance with the embodiment of this invention in the tool exchange or replacement position (wherein the bevel gears are coupled with each other),

Fig. 6 is a schematic drawing of a first cam mechanism which is essential for a tool exchanger or tool replacement system for a machine tool in accordance with this invention,

Fig. 7 is a schematic drawing of a second cam mechanism which is essential for a tool exchanger or tool replacement system for a machine tool in accordance with this invention, and

Fig. 8 is a time chart illustrating the operation of a tool exchanger or tool replacement system for a machine tool in accordance with the embodiment of this invention.

DETAILED DESCRIPTION OF PREFERRED EMBODIMENT

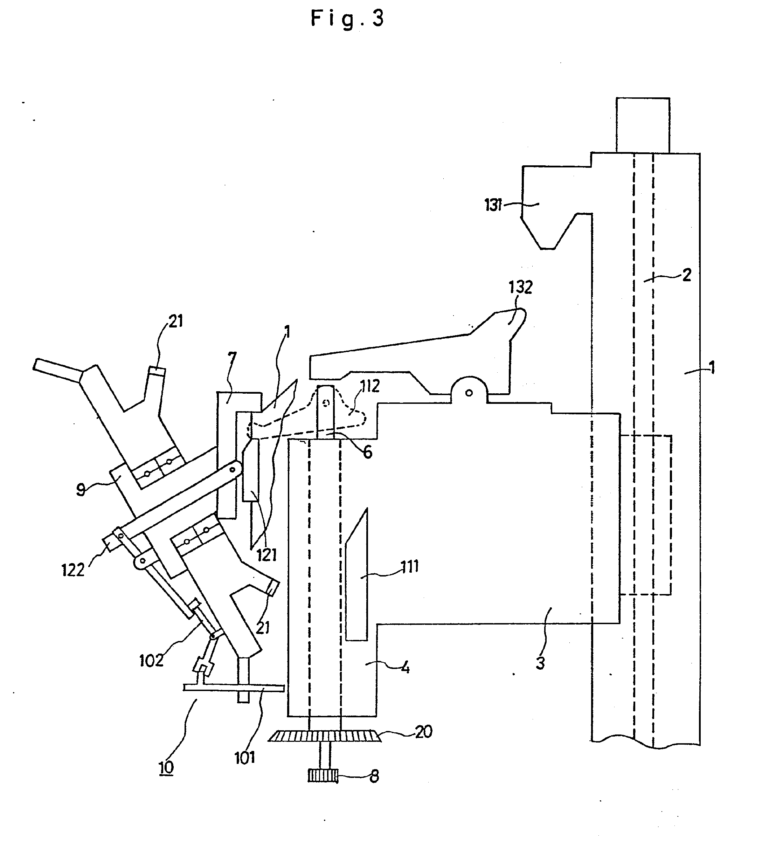

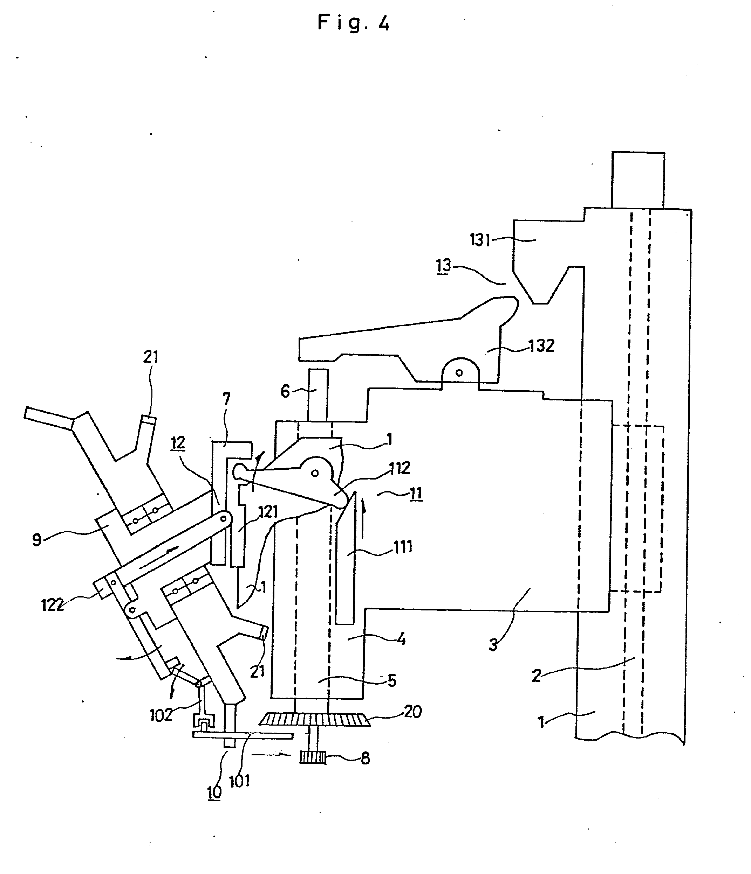

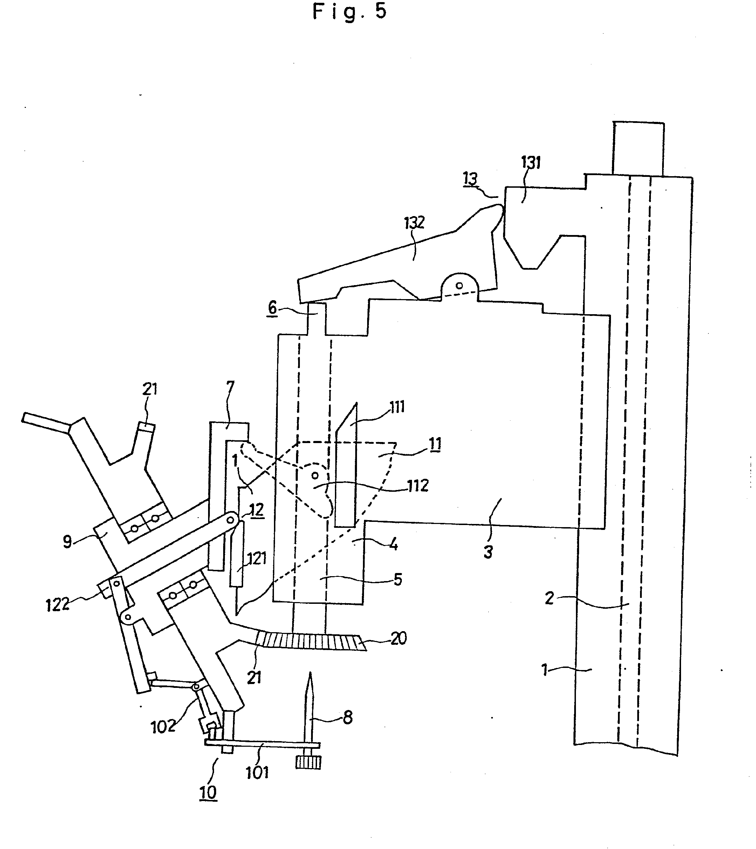

Referring to Fig. 3 illustrating the machining position (the position at which a machining has just finished), Fig. 4 illustrating the middle position (the position at which the relative postition of an arbitrarily selected one of the tool grips 10 and a tool 8 is slightly before arriving at the tool exchange or replacement position and at which the vertical level of the arbitrarily selected one of the tool grips 10 is identical to that of the arbour of the tool 8, and Fig. 5 illustrating the tool exchange or replacement position (at which the bevel gears are coupled with each other), the numeral 1 designates a column. In the drawings, the column 1 is illustrated in two independent parts including a pillar and the other part which rotatably supports the first lever 112 of the first cam mechanism 11 and the second cam 121 of the second cam mechanism and which supports a magazine supporter 7 to be described later during a period in which the first cam mechanism 11 does not operate. The column 1 houses the Z-shaft 2, rotatably supports the first lever 112 of the first cam mechanism 11 and the second cam 121 of the second cam mechanism 12. In addition, the column 1 supports the magazine supporter 7 to be described later during a period in which the first cam mechanism 11 does not operate (See Fig. 3). The magazine supporter 7 moves in the vertical direction along the column 1.

The numeral 3 designates a Z-slider, and is movable in the vertical direction along the Z-shaft 2. The numeral 4 designates a spindle head, and is supported by the Z-slider 3. The spindle head 4 rotatably houses a main spindle 5 and a tool attachment/detachment means 6 such as a drawbar etc. having a collet (not shown) at the lower end thereof, for allowing the tool 8 to be attached to or detached from the main spindle 5.

The numeral 7 designates a magazine supporter. Although the magazine supporter 7 is supported by the column 1 during a period in which the first cam mechanism

11

11 does not operate, as was described earlier, it is supported by the first lever 112 of the first cam mechanism 11 during a period in which the first cam mechanism 11 operates, resultantly being allowed to move in the vertical direction together with the Z-slider 3 and the spindle head 4 (See Fig. 4). After the first cam mechanism 11 finishes the operation, the Z-slider 3 alone continues the upward move, with respect to the column 1 and the magazine supporter 7. The magazine supporter 7 permanently maintains the magazine 9 and the tool grips 10.

The numerals 20 and 21 designate bevel gears. The one 20 of the bevel gears which is supported by the end of the main spindle 5, is coupled with the other 21 at the tool replacement position (See Fig. 5).

Each of the tool grips 10 consists of a tool gripping member 101 which grips the tool 8 with an elastic force or the like and a lever 102 which is driven by the second cam mechanism 12. The numerals 11, 12 and 13 are respectively the first cam mechanism, the second cam mechanism and the third cam mechanism, each of which is the subject matter of this invention.

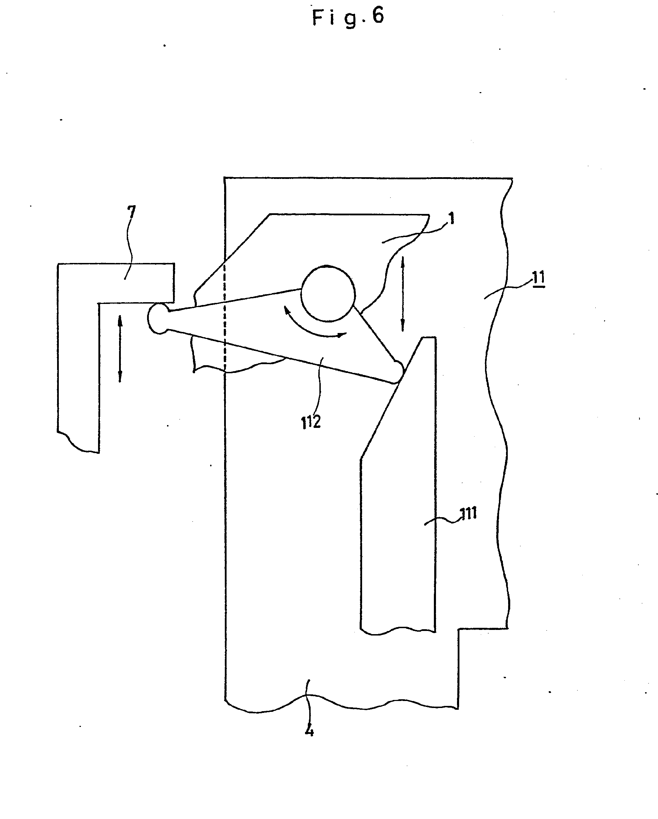

Referring also to Fig. 6, the numeral 11 designates the first cam mechanism, which consists of the first cam 111 supported by the spindle head 4 and a first lever 112 rotatably supported by the column 1. The first lever 112 supports the magazine supporter 7 during periods wherein the first lever 112 is driven by the first cam 111 and an indexing is conducted, and the magazine supporter 7 moves upward or downward together with the spindle head 4 during a period in which the first cam mechanism 11 operates. During the period excluding the aforementioned periods, the magazine supporter 7 remains unmoved with respect to the column 1.

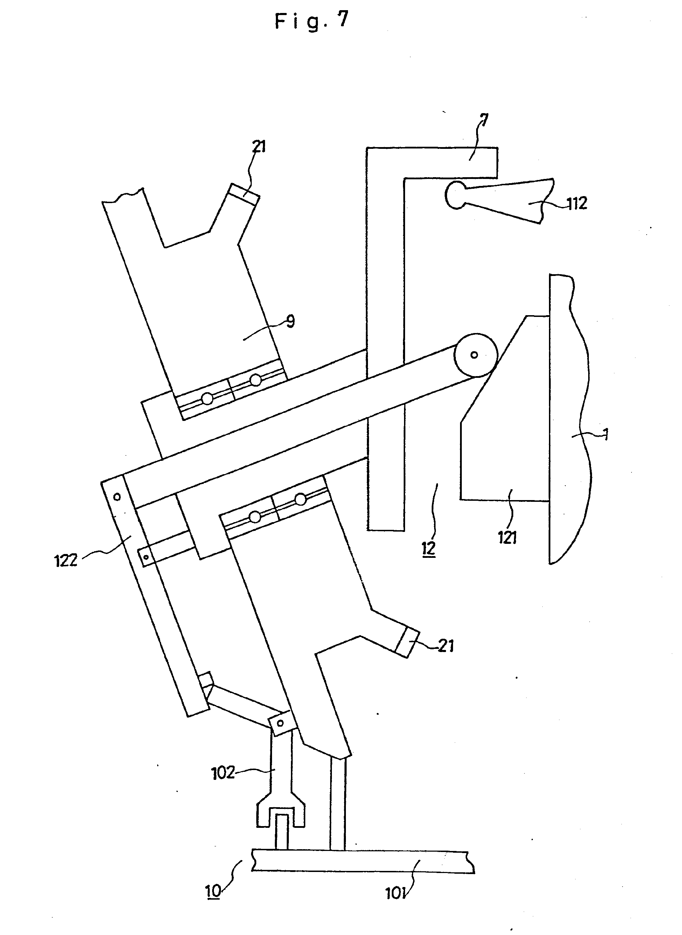

Referring also to Fig. 7, the numeral 12 designates the second cam mechanism, which consists of the second cam 121 supported by the column 1 and a link mechanism 122 to be described below. The link mechanism 122 which rotatably supports the magazine 9, is rotatably supported by the magazine supporter 7 and is allowed to move forward or backward along the shaft of the link mechanism 122 with respect to the magazine supporter 7 and the magazine 9. Therefore, the second cam mechanism 12 operates in response to a vertical move of the magazine supporter 7 with respect to the column 1. In response to the operation of the second cam mechanism 12, a selected of the tool grips 10 grips or ungrips a tool 8. In other words, the tool girp 10 moves in the holizontal direction by the move of the link mechanism 122 during a period in which the second cam mechanism 12 operates.

Referring to Fig. 4 again, once the Z-slider 3 provided the first cam 111 rises until the first cam 111 of the first cam mechanism 11 contacts the first lever 112, the first lever 112 rotates in the clockwise direction along the arrow, resultantly causing the magazine supporter 7 to move upward.

This upward move of the magazine supporter 7 causes the shaft of the link mechanism 122 of the second cam mechanism 12 (a shaft rotatably supporting the magazine 9) to slide in the direction of the arrow toward the upper right in the drawing. This slide of the shaft causes a lever 102 of the second cam mechanism 12 to rotate along the arrow in the counterclokwise direction, resultantly causing a tool gripping member 101 of the tool grip 10 to thift along the arrow toward right in the drawing (or toward the arbour of the tool 8), to grip the tool 8. The tool gripping member 101 can be designed based either on a principle employing an elastic member or on a principle employing a couple of jaw type members.

Referring to Fig. 4 three times, the third cam mechanism 13 consists of the third cam 131 supported by the column 1 and the third lever 132 rotatably supported by the Z-slider 3.

Once the Z-slider 3 rises until the third lever 132 contacts the third cam 131, the third lever 132 causes the tool attachment/detachment means 6 to operate to cause the tool 8 to be unclamped from the main spindle 5. In other words, for example, the third lever 132 causes the tool attachment/detachment means 6 to push a drawbar (not shown) downward to open a collet (not shown), for the ultimate purpose to disconnect the tool 8 from the main spindle 5.

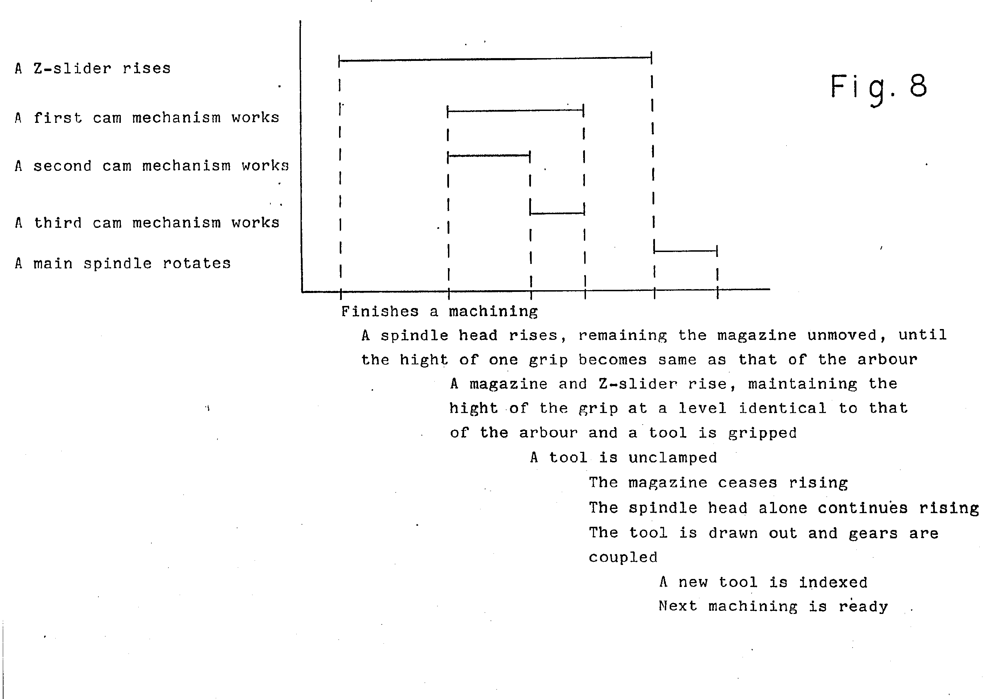

Referring to Fig. 8 illustrating a time chart, the operation of a tool exchanger or tool replacement system for a machine tool in accordance with an embodiment of this invention will be described below.

Referring also to Fig. 3, when a machining finishes, the relative position of the magazine supporter 7, the magazine 9, the specific one of the tool grips 10 which will be employable for the next tool exchange step and the spindle head 4, is in a position shown in Fig. 3. Since the specific one of the tool grips 10 is not located in the machining area where the tool 8 which was employed for the last machining is located but is located at a higher position, when a mechining finishes at the aforementioned relative position, the operator is given a large area for his work therein during a machining period. In this relative position, the magazine supporter 7 is supported by the column 1, and the specific one of the tool grips 10 is in the opening position.

Referring also to Fig. 4, during a short period after the Z-slider 3 begins to rise from the position illustrated in Fig. 3, the Z-slider 3 and the spindle head 4 alone rise, remaining the magazine supporter 7 unmoved. During this period, the hight of the tool gripping member 101 of the specific one of the tool grips 10 is brought to be identical to that of the arbour of the tool 8. As a result, the relative position of the magazine supporter 7, the magazine 9, the specific one of the tool grips 10 and the spindle head 4 changes from the position shown in Fig. 3 to the position shown in Fig. 4.

A contact of the first lever 112 with the first cam 111 causes the first lever 112 to rotate along the arrow in the clockwise direction, allowing the first cam mechanism 11 to begin the operation. Namely, during the period in which the first cam mechanism 11 is working, the magazine supporter 7, the magazine 9 and the specific one of the tool grips 10 moves upward together with the spindle head 4. During this period in which the magazine supporter 7, the magazine 9 and the specific one of the tool grips 10 moves upward together with the spindle head 4, the specific one of the tool grips 10 maintains the hight at which the arbour of the tool 8 can be gripped. The specific one of the tool grips 10 remains in an open position (a position in which the each piece of the jaw opens from each other ready for gripping) until the first cam mechanism 11 begins the operation.

Approximately at the same time as the first cam mechanism 11 begins the operation, the second cam mechanism 12 also begins the operation.

Although the Z-slider 3, the spindle head 4 and the magazine 9 keeps rising, the specific one of the tool grips 10 shifts to a gripping position (closed position), as was described earlier, and it grips the tool 8 which was used for the last machining. Namely, an operation of the second cam mechanism 12 causes the tool gripping member 101

to move toward right in the drawing to grip the tool 8.

The Z-slider 3 and the spindle head 4 continue the rising. A contact of the third lever 132 with the third cam 131 causes the third cam mechanism 13 to operate, and the tool attachment/detachment means 6 works to detach the tool 8 from the main spindle 5. Since the tool 8 has already been gripped by the specific one of the tool grips 10 by this time, however, the tool 8 dose not drop but is drawn out of the spindle 5, because it is held by the specific one of the tool grips 10.

Referring to Fig. 5 again, the first cam mechanism 11 ceases the operation at this position. Thereafter, the Z-slider 3 alone continues the rising, remaining the magazine supporter 7 and the magazine 9 unmoved.

As a result, a bevel gear 20 supported by the lower end of the main spindle 5 is caused to couple with the other bevel gear 21 supported by the magazine 9. Incidentally, the tool 8 which was kept clamping with the main spindle and during the period in which was employed for the last machining had been conducted, is drawn out of the spindle head 4. At this position, the Z-slider stops the rising.

Thereafter, the main spindle 5 is rotated for the purpose to rotate the magazine 9 through the gears 20 and 21 and to bring another arbitrary tool 8 to the position facing the main spindle 5.

The aforementioned steps have indexed another arbitrary tool 8. After a new tool 8 is indexed, the aforementioned steps can be retraced to return to the machining position.

The Z-slider 3 is lowered from the position illustrated in Fig. 5. The Z-slider 3 alone moves downward until the first cam mechanism 11 begins the operation, remaining the magazine supporter 7 unmoved.

The first cam mechanism 11 and the third cam mechanism 13 begin the operation almost simultaneously. During the period in which the magazine supporter 7 and the magazine 9 are lowered together with the spindle head 4, the tool attachment/detachment means 6 are operated to fit the newly indexed tool 8 to the main spindle 5.

At this position, the third cam mechanism 13 ceases the operation. Thereafter, the second cam mechanism 12 begins the operation to return the specific one of the tool grips 10 to the open position (a position at which the tool grip 10 releases a tool 8). At this position, the first cam mechanism terminates the operation, allowing the spindle head 4 alone to continue the downward move, until it arrives at the machining position illustrated in Fig. 3.

The aforementioned description has clarified that this invention has successfully provided a tool exchanger or tool replacement system for a machine tool having various advantages including (i) a large space is available in the machining area during a machining period in the machining position, because no disturbing parts are available in the machining area during the machining period, (ii) a vertical move of the Z-slider allows an arbitrarily selected one of the tool grips to shuttle between the machining position and the tool exchange or replacement position, and (iii) a rotation of the main spindle conducted at the tool exchange or replacement position allows an indexing of another arbitrary tool.

Although this invention has been described with reference to one specific embodiment, this description is not meant to be construed in a limiting sense. Various other embodiments and/or modifications of this invention will become apparent to persons skilled in the art upon reference to the description of this invention. It is therefore contemplated that the claim will cover any such embodiments and/or modifications as fall within the true scope of this invention.

0290615

CLAIM

1. A tool exchanger for a machine tool comprising :

a Z-slider (3) slidable along a column (1),

a spindle head (4) supported by said Z-slider (3) and rotatably housing a main spindle (5) and a tool attachment/detachment means (6) therein, and

a magazine supporter (7) movable in the vertical direction along said column (1), and

a magazine (9) which is rotatably supported by said magazine supporter (7) and which has a plurality of tool grips (10) each of which grips or ungrips a tool (8) during a period in which said tool (8) is replaced and each of which maintains said tool (8) during the other period excluding said period in which said tool (8) is replaced, further comprising :

a first cam mechanism (11) consisting of a first cam (111) supported by said spindle head (4) and a first lever (112) rotatably supported by said column (1), being operated in response to the vertical move of said Z-slider (3) and said spindle head (4), but for keeping unchanged the relative position of an assembly consisting of said magazine supporter (7), said magazine (9) and said plurality of tool grips (10) with respect to said spindle head (4), during the period in which arbitrary one of said tool grips (10) and/or the tool attachment/detachment means (6) operate/operates,

a second cam mechanism (12) consisting of a second cam (121) supported by said column (1) and a link mechanism (122) which link mechanism (122) is supported by said magazine supporter (7), is rotatable with respect to said magazine (9) and is movable forward and backward along the shaft thereof, for allowing said arbitrary one of said tool grips (10) to be gripped or ungripped in response to the vertical move of said Z-slider (3) and said spindle head (4), and

a third cam mechanism (13) consisting of a third cam (131) supported by said column (1) and a third lever (132) rotatably supported by said Z-slider (3), for operating said column attachment/detachment means (6).

Fig. 1

Fig. 2

Fig.3

0290615

Fig. 4

Fig. 5

Fig. 7

A Z-slider rises

A first cam mechanism works

A second cam mechanism works

A third cam mechanism works

A main spindle rotates

Fig. 8

Finishes a machining

A spindle head rises, remaining the magazine unmoved, until
the hight of one grip becomes same as that of the arbour

A magazine and Z-slider rise, maintaining the
hight of the grip at a level identical to that
of the arbour and a tool is gripped

A tool is unclamped

The magazine ceases rising

The spindle head alone continues rising

The tool is drawn out and gears are
coupled

A new tool is indexed

Next machining is ready

7/7

0290615

0290615

# INTERNATIONAL SEARCH REPORT

International Application No    PCT/JP87/00834

## I. CLASSIFICATION OF SUBJECT MATTER (if several classification symbols apply, indicate all) 3

According to International Patent Classification (IPC) or to both National Classification and IPC

Int.Cl⁴    B23Q3/157

## II. FIELDS SEARCHED

### Minimum Documentation Searched 4

| Classification System | Classification Symbols |
| --- | --- |
| IPC | B23Q3/155, B23Q3/157 |

### Documentation Searched other than Minimum Documentation to the Extent that such Documents are Included in the Fields Searched 5

| | |
| --- | --- |
| Jitsuyo Shinan Koho | 1973 - 1987 |
| Kokai Jitsuyo Shinan Koho | 1974 - 1987 |

## III. DOCUMENTS CONSIDERED TO BE RELEVANT 14

| Category * | Citation of Document, 16 with indication, where appropriate, of the relevant passages 17 | Relevant to Claim No. 18 |
| --- | --- | --- |
| A | JP, A, 60-155338 (Brother Industreis, Ltd.) 15 August 1985 (15. 08. 85) (Family: none) | 1 |

* Special categories of cited documents: 15

"A" document defining the general state of the art which is not considered to be of particular relevance

"E" earlier document but published on or after the international filing date

"L" document which may throw doubts on priority claim(s) or which is cited· to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance: the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search 2 | Date of Mailing of this International Search Report 2 |
| --- | --- |
| January 8, 1988 (08. 01. 88) | January 25, 1988 (25. 01. 88) |

| International Searching Authority 1 | Signature of Authorized Officer 20 |
| --- | --- |
| Japanese Patent Office | |

Form PCT/ISA/210 (second sheet) (October 1977)